# NEUE EUROPÄISCHE PATENTSCHRIFT

(11) **EP 2 821 173 B2**
(45) Veröffentlichungstag und Bekanntmachung des Hinweises auf die Entscheidung über den Einspruch: **22.12.2021**
(45) Hinweis auf die Patenterteilung: 27.02.2019
(21) Anmeldenummer: 13175413.7
(22) Anmeldetag: 05.07.2013
(51) Int. Cl.: B23K 1/00, F28F 1/02, F28F 21/08, B32B 15/01, B23K 35/02, B23K 35/28, B23K 35/00, C22C 21/00, C22C 21/02, F28D 1/03, F28D 1/053, F28F 9/02

(54) **Aluminiumverbundwerkstoff mit innenliegender Lotschicht**
Aluminium compound material with inlaid solder layer
Matériau composite en aluminium avec couche brasée intérieure

(43) Veröffentlichungstag der Anmeldung: 07.01.2015
(73) Patentinhaber: Speira GmbH, 41515 Grevenbroich (DE)
(72) Erfinder: JANSSEN, Hartmut, 40724 Hilden (DE)
(74) Vertreter: Cohausz & Florack

(56) Entgegenhaltungen:
- EP-A1- 1 457 616
- EP-A2- 0 712 681
- JP-A- H0 647 578
- US-A- 2 821 014
- US-A1- 2011 100 615
- The Aluminium Association: "Registration Record Series Teal Sheets", , February 2009 (2009-02),
- "Brazing and Soldering" In: J.R. Davis: "ASM Specialty Handbook Aluminum and Aluminum Alloys", 1993, ASM International pages 420-423,
- John E Hatch: "Aluminum: Properties and Physical Metallurgy", 1984, American Society for Metals pages 301, 372-373,

## Beschreibung

Die Erfindung betrifft einen dreischichtigen lötbaren Aluminiumverbundwerkstoff bestehend aus mindestens zwei verschiedenen Aluminiumlegierungen, wobei eine innere Schicht der mindestens drei Schichten eine Aluminiumlotschicht aus einer Aluminiumlotlegierung ist, die anderen Schichten als Deckschichten ausgebildet sind und aus mindestens einer weiteren Aluminiumlegierung bestehen, wobei die mindestens eine weitere Aluminiumlegierung eine höhere Solidustemperatur als die Liquidustemperatur der Aluminiumlotlegierung aufweist und eine Gesamtdicke des Aluminiumverbundwerkstoffs 0,2 mm bis 1,0 mm beträgt. Daneben betrifft die Erfindung eine gelötete Konstruktion. Aus dem Stand der Technik sind lötbare Aluminiumverbundwerkstoffe seit langem bekannt. Die Aluminiumverbundwerkstoffe, welche für die Lötverbindungstechnik verwendet werden, weisen üblicherweise eine Aluminiumlotschicht auf der Oberfläche auf, welche während des Lötvorganges aufschmilzt, so dass das die Aluminiumlotschicht aufweisende Bauteil mit dem Verbindungspartner über eine Lötverbindung verbunden wird. Die übrigen Schichten des Aluminiumverbundwerkstoffes werden nicht aufgeschmolzen. Ein entsprechender Verbindungsvorgang geschieht beispielsweise bei der Herstellung von Wärmetauschern, welche in der Regel eine Vielzahl an Lötverbindungsstellen, beispielsweise zur Befestigung der Lamellen oder der Flüssigkeit führenden Rohre, aufweisen. Bisher wurden mit äußeren Aluminium-lotschichten versehene Bleche verwendet, um Wärmetauscher zu löten. Allerdings ergeben sich insbesondere an den für einen I-Stoß vorgesehenen Lötverbindungen Probleme aufgrund eines Überschusses an Aluminiumlot. Durch ein lokales Überangebot an Silizium wird die Liquidustemperatur des Verbindungspartners lokal stark abgesenkt, so dass es zu einem "Durchbrennen" oder zu einer Verringerung der Wanddicke des Bauteils in diesem Bereich kommen kann. Die Gefahr eines Überangebotes an Silizium ist beispielsweise an den I-Stoß Lötverbindungen des Sammelverteilers und den zugehörigen Wasser führenden Rohren der Fall. Selbst wenn es während des Lötverfahrens nicht zu einem "Durchbrennen" des zu lötenden Rohres kommt, können Bereiche mit verringerter Wanddicke entstehen oder ein sogenannter "Liquid Film Migration" Effekt auftreten. Beim Liquid Film Migration Effekt treten an der Oberfläche bereichsweise Gefügedefekte auf, welche auf die Diffusion von Silizium im Verbundwerkstoff zurückgeführt werden. Diese Bereiche der gelöteten Bauteile stellen ein Problem in Bezug auf die Langlebigkeit beispielsweise eines gelöteten Wärmetauschers dar. Die üblicherweise verwendeten äußeren Aluminiumschichten verwendeter Verbundwerkstoffe sind Aluminiumlotschichten, welche während des Lötvorgangs aufweichen und anschließend wieder erstarren. Hierdurch können aufgrund des Fließverhaltens der Aluminiumlotschicht zusätzlich mechanische Probleme in Bezug auf eine Kerbwirkung der erstarrten, unregelmäßigen Aluminiumlotschichtoberfläche auf andere Bauteile des Wärmetauschers entstehen. Auch nachfolgende Beschichtungen der Wärmetauscher können aufgrund der aufgeschmolzenen und wieder erstarrten äußeren Schicht problematisch sein. Nachteilig ist zudem, dass die außen liegenden Aluminiumlotschichten von einer Aluminiumoxidschicht bedeckt sind, welche bei der Herstellung der Lötverbindungen Probleme in Bezug auf die Benetzbarkeit der Lötstellen mit Aluminiumlot verursachen kann. Hierdurch wird ein erhöhter Einsatz an Flussmitteln notwendig, um die Qualität der Lötverbindungen zu gewährleisten. Aus der veröffentlichen US-Patentanmeldung US 2003/0099856 A1 ist beispielsweise ein lötbarer Aluminiumverbundwerkstoff bestehend aus insgesamt fünf Schichten bekannt, wobei eine innen liegende Aluminiumkernlegierungsschicht vorgesehen ist, welche von zwei äußeren Aluminiumlotschichten umgeben ist, auf welchen zusätzlich eine dünne Aluminiumschicht aufgebracht ist. Die dünne Aluminiumschicht soll dafür sorgen, dass das Aluminiumlot nicht oxidiert, so dass auf den Einsatz von Flussmitteln verzichtet werden kann. Allerdings ist der Schichtaufbau des bekannten Aluminiumverbundwerkstoffes relativ komplex, da insgesamt mindestens fünf Aluminiumlegierungsschichten bereitgestellt werden müssen. Die äußere sehr dünne Deckschicht schmilzt beim Lötvorgang jedoch auf, so dass die oben beschriebenen Probleme bezüglich der aufgeschmolzenen Oberfläche nicht gelöst werden. Insbesondere erfordert die Bereitstellung sehr dünner Deckschichten auf der Aluminiumlotschicht hohe Anforderungen an den Produktionsprozess, so dass mit höheren Kosten in der Herstellung zu rechnen ist. Aus dem US Patent US 4,825,941 ist die Herstellung eines Wärmetauschers bekannt, welcher einen Sammelverteilerbesitzt, der durch Lötverbindungen im I-Stoß mit den Flüssigkeit führenden Flachrohren verlötet ist.

Von diesem Stand der Technik ausgehend ist es Aufgabe der vorliegenden Erfindung einen lötbaren Aluminiumverbundwerkstoff zur Verfügung zu stellen, welcher einfach aufgebaut ist, gute Löteigenschaften zur Herstellung von I-Stoß-Lötverbindungen besitzt, die Gefahr eines "Durchbrennens" von angelöteten Bauteilen deutlich reduziert sowie ausreichende mechanische Eigenschaften bereitstellt. Darüber hinaus soll auch eine gelötete Konstruktion vorgeschlagen werden.

Gemäß einer ersten Lehre der vorliegenden Erfindung wird die aufgezeigte Aufgabe durch einen Aluminiumverbundwerkstoff dadurch gelöst, dass die einzelnen Deckschichten eine Dicke aufweisen, welche die Dicke der Aluminiumlotschicht um mindestens den Faktor 1,5 , vorzugsweise mindestens um einen Faktor 5 übersteigt.

Es hat sich herausgestellt, dass ein einfacher, dreischichtiger Aluminiumverbundwerkstoff, welcher eine innen liegende Aluminiumlotschicht und zwei Deckschichten aufweist, wobei die Deckschichten eine um den Faktor 1,5 oder größer aufweisende Dicke als die Aluminiumlotschicht besitzen, nicht nur einwandfreie Lötergebnisse ermöglicht, sondern auch die Gefahr eines Durchbrennens erheblich reduziert. Zudem stellt dieser lötbare Aluminiumverbundwerkstoff als äußere Oberfläche eine gewalzte Aluminiumoberfläche bereit, welche nach dem Löten keine Probleme in Bezug auf Unebenheiten der Oberfläche und den daraus resultierenden Kerbwirkungen mit anderen Bauteilen aufweist. Beträgt der Faktor 5 und mehr wird die Festigkeit des Aluminiumverbundwerkstoffs noch stärker durch die Deckschichten des bestimmt. Es ist denkbar, dass der Aluminiumverbundwerkstoff gemäß der vorliegenden Erfindung lediglich dreischichtig aufgebaut ist. Erfindungsgemäß kann abhängig von der Anwendung dieser Aluminiumverbundwerkstoff allerdings auch durch weitere äußere Schichten ergänzt werden, um spezifische Anforderungen an den Aluminiumverbundwerkstoff, beispielsweise die Bereitstellung einer Opferanodenschicht oder weiterer Lotschichten, zu gewährleisten. Die Deckschichten des Aluminiumverbundwerkstoffs tragen wesentlich zu den mechanischen Eigenschaften des Aluminiumverbundwerkstoffes bei, welche durch das Schmelzen der Lotschicht im Inneren des Aluminiumverbundwerkstoffes nicht beeinflusst werden. Selbstverständlich ist denkbar, dass die Deckschichten aus unterschiedlichen Aluminiumlegierungen bestehen.

Vorzugsweise weisen die Deckschichten eine Dicke von 10 % bis 49 %, bevorzugt 15 % - 47,5 % der Gesamtdicke des Aluminiumverbundwerkstoffes auf. Hierdurch wird gewährleistet, dass, wie bereits ausgeführt, der Einfluss der Deckschichten auf die mechanischen Eigenschaften des Aluminiumverbundwerkstoffes besonders hoch ist und eine hohe Formstabilität auch während des Lötverfahrens gewährleistet werden kann.

Bevorzugt beträgt die Dicke der Aluminiumlotschicht mindestens 25µm, vorzugsweise mindestens 50 µm, sodass die Prozesssicherheit zur Bereitstellung einer einwandfreien Lötverbindung, beispielsweise im I-Stoß verbessert wird.

Abhängig von den jeweiligen Anwendungen können die einzelnen Deckschichten aus einer Aluminiumlegierung vom Typ AA1xxx, AA3xxx, AA5xxx, AA6xxx oder AA7xxx bestehen, wobei optional die Deckschichten entweder aus identischen Aluminiumlegierungen oder aus verschiedenen Aluminiumlegierungen aufgebaut sind. Auch die Dicken der Deckschichten müssen nicht identisch sein, sondern können abhängig vom Anwendungsfall spezifisch ausgewählt werden. Denkbar ist beispielsweise, dass die Deckschichten aus Aluminiumlegierungen vom Typ AA3003 oder AA3005 bestehen.

Üblicherweise werden für die Aluminiumlotschicht Aluminiumlegierungen vom Typ AA4xxx ausgewählt, wobei bevorzugt die Aluminiumlotschicht aus einer AlSi-Aluminiumlegierung mit einem Si-Gehalt von 6 Gew.-% - 13 Gew.-% besteht. Diese Aluminiumlotlegierungen werden für die Bereitstellung von Aluminiumlotplattierungen verwendet, da diese eine Liquidustemperatur aufweisen, welche deutlich unterhalb der Solidustemperaturen der für die Deckschichten verwendeten Aluminiumlegierungen liegt.

Ein bevorzugter Dickenbereich des Aluminiumverbundwerkstoffes liegt zwischen 0,3 mm bis 1,0mm dar. Dies stellt den bevorzugten Dickenbereich für Teile von Wärmetauschern mit geringer Wanddicke dar.

Gemäß einer weiteren Ausgestaltung des Aluminiumverbundwerkstoffes ist dieser durch Walzplattieren oder simultanes Gießen hergestellt. Beim Walzplattieren werden Plattierwerkstoffe und die Deckschichten zu einem Walzbarren gestapelt und anschließend warmgewalzt, wobei eine flächige, stoffschlüssige Verbindung zwischen den einzelnen Aluminiumlegierungsschichten hergestellt wird. Ein anderes Verfahren zur Herstellung eines Aluminiumverbundwerkstoffes stellt das simultane Gießen der einzelnen Aluminiumverbundwerkstoffschichten dar. Im Unterschied zum Walzplattieren wird hier flüssige Schmelze verschiedener Aluminiumlegierungen simultan zu einem Band vergossen. Die mit dem Walzplattieren hergestellten Aluminiumverbundwerkstoffe unterscheiden sich von den Aluminiumverbundwerkstoffen, welche durch simultanes Gießen hergestellt werden durch einen diskreten Schichtübergang zwischen den Deckschichten beispielsweise und der Aluminiumlotschicht. Während beim simultanen Gießen aufgrund der hohen Temperaturen ein deutlicher Konzentrationsgradient zwischen den einzelnen beteiligten Schichten unvermeidbar ist.

Gemäß einer weiteren Ausgestaltung des erfindungsgemäßen Aluminiumverbundwerkstoffes bestehen die Deckschichten aus Aluminiumlegierungen, welche einen Mg-Gehalt von weniger als 0,25 Gew.-%, vorzugsweise weniger als 0,1 Gew.-% aufweisen. Die Reduktion des Mg-Gehalts in den Deckschichten der Aluminiumlegierungen trägt dazu bei, dass beim Löten unter Verwendung von Flussmitteln der Lötprozess durch die Legierungsbestandteile der Deckschichten nicht gestört wird. Insbesondere ist dann die Eignung für die weniger aufwändigen CAB-Lötverfahren verbessert.

Gemäß einer weiteren Lehre der vorliegenden Erfindung wird die oben aufgezeigte Aufgabe durch eine gelötete Konstruktion umfassend mindestens ein erstes Bauteil, welches zumindest teilweise aus einem erfindungsgemäßen Aluminiumverbundwerkstoff besteht gelöst, wobei das erste Bauteil mit mindestens einem zweiten Bauteil mit einer Lötverbindung verbunden ist. Wie bereits zuvor ausgeführt, eignet sich der Aluminiumverbundwerkstoff sehr gut für die Bereitstellung von Lötverbindungen, da über die Deckschichten die Aluminiumlotschicht während des Lötverfahrens nicht erneut oxidieren kann. Darüber hinaus tragen die Deckschichten zur mechanischen Festigkeit des ersten Bauteils bei und verhindern gleichzeitig ein "Durchbrennen" des zweiten Bauteils während des Lötens aufgrund eines Überangebotes an Aluminiumlot.

Bevorzugt weist die Konstruktion mindestens eine Lötverbindung in Form eines I-Stoßes auf, da hier der erfindungsgemäße Aluminiumverbundwerkstoff bei Lötverbindungen in Form von I-Stößen aufgrund der innen liegenden Aluminiumlotschicht besonders gute Lötergebnisse erzielt.

Gemäß einer weiteren Ausgestaltung der gelöteten Konstruktion ist diese ein Wärmetauscher oder ein Teil eines Wärmetauschers. Beispielsweise besteht Gemäß einer weiteren Ausgestaltung der gelöteten Konstruktion ist diese ein Wärmetauscher oder ein Teil eines Wärmetauschers. Beispielsweise besteht bevorzugt der Sammelverteiler eines Wärmetauschers, welcher zur Aufnahme von Kühlflüssigkeit führenden Flachrohren oder Rohren vorgesehen ist, mit welchen dieser über einen I-Stoß verbunden ist. Eine weitere bevorzugte Ausführungsform sind Faltrohre, welche aus einem Aluminiumlegierungsblech bestehen, das beispielsweise zu einem B-förmigen Querschnitt gebogen und gelötet ist. Ein Faltrohr weist daher ebenfalls immer mindestens eine I-Stoß Lötverbindung auf.

Im Weiteren soll die Erfindung anhand von Ausführungsbeispielen in Verbindung mit der Zeichnung näher erläutert werden. Die Zeichnung zeigt
- Fig. 1: in einer schematischen Schnittansicht ein erstes Ausführungsbeispiel eines Aluminiumverbundwerkstoffes,
- Fig. 2: in einer schematischen Schnittansicht eine Lötverbindung eines ersten Ausführungsbeispiels einer gelöteten Konstruktion,
- Fig. 3: in einer schematischen, perspektivischen Darstellung ein weiteres Ausführungsbeispiel einer gelöteten Konstruktion in Form eines Wärmetauschers und
- Fig. 4: ein weiteres Ausführungsbeispiel einer gelöteten Konstruktion in Form eines Faltrohres in einer schematischen Schnittansicht.

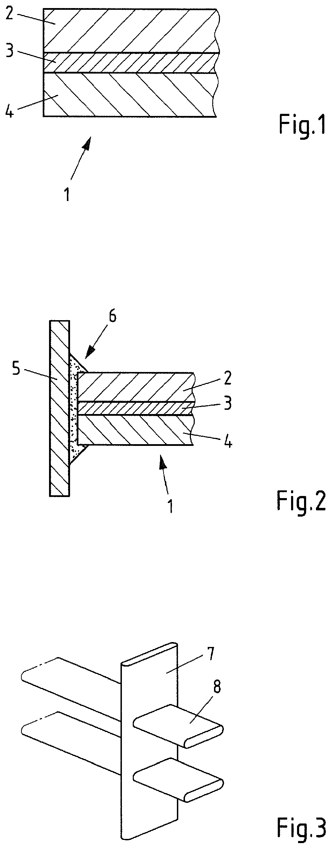

In Fig. 1 zunächst ein erstes Ausführungsbeispiel eines erfindungsgemäßen Aluminiumverbundwerkstoffes umfassend drei Schichten bestehend aus mindestens zwei verschiedenen Aluminiumlegierungen dargestellt. Der Aluminiumverbundwerkstoff 1 weist eine obere Deckschicht 2, eine innen liegende Aluminiumlotschicht 3 sowie eine untere Deckschicht 4 auf, wobei die Deckschichten 2, 4 der Aluminiumlotschicht eine Dicke aufweisen, welche die Dicke der eine Dicke von 475 µm auf, sodass eine Gesamtdicke des Aluminiumverbundwerkstoffs von 1,0 mm vorliegt. Die Deckschichten weisen damit eine Dicke auf, welche um den Faktor 9.5 größer ist als die der Aluminiumlotschicht. Denkbar ist, dass der Aluminiumverbundwerkstoff 1 neben den Deckschichten 2,4 und der Aluminiumlotschicht 3 weitere Schichten aufweist, um zum Beispiel weitere Funktionen, beispielsweise die Bereitstellung einer Opferanodenschicht, bereitzustellen.

In dem vorliegenden Ausführungsbeispiel weisen die Deckschichten jeweils einzeln 47,5 % der Gesamtdicke auf. Im Minimum beträgt der Dickenanteil der Deckschichten an der Gesamtdicke des Aluminiumverbundwerkstoffes jedoch 15 %. Dies kann beispielsweise der Fall sein, wenn weitere Schichten, also z. B. eine Opferanodenschicht hinzukommt. Auch andere Korrosionsschutzschichten, beispielsweise bestehend aus einer Aluminiumlegierung vom Typ AA1xxx, können vorgesehen sein. Denkbar ist auch, dass weitere Lotschichten außen vorgesehen sind.

In Fig. 2 ist in einer schematischen Schnittansicht ein erstes Ausführungsbeispiel einer gelöteten Konstruktion dargestellt, wobei die gelötete Konstruktion einen Aluminiumverbundwerkstoff mit jeweils zwei Deckschichten 2, 4 und einer innen liegenden Aluminiumlotschicht 3 aufweist, welcher im I-Stoß mit einem weiteren Bauteil 5 über eine Lötverbindung verbunden ist. Der Aluminiumverbundwerkstoff 1 kann beispielsweise Deckschichten aus Aluminiumlegierungen vom Typ AA1xxx, AA3xxx, AA5xxx, AA6xxx oder AA7xxx. Für Wärmetauscher sind vorzugsweise die Aluminiumlegierungstypen AA3003 oder AA3005 als Deckschichten vorteilhaft, da diese die notwendigen Festigkeiten nach dem Löten aufweisen und darüber hinaus kostengünstig sind. Wie Fig. 2 eindrucksvoll zeigt, ermöglicht die innen liegende Aluminiumlotschicht 3, dass während des Lötprozesses, das flüssig werdende Aluminiumlot aus dem Inneren des Verbundwerkstoffes austritt und eine Lötverbindung 6 zwischen dem Aluminiumverbundwerkstoff 1 und dem Bauteil 5 herstellt. Dies liegt insbesondere daran, dass die Aluminiumlotschicht, welche vorzugsweise einen Si-Gehalt von 6 Gew.-% - 13 Gew.-% aufweist eine Liquidustemperatur besitzt, welche niedriger ist als die Solidustemperatur der Deckschichten 2, 4 ist, sodass nur die Aluminiumlotschicht 3 bei den Löttemperaturen verflüssigt. Aufgrund der Tatsache, dass das innen liegende Aluminiumlot gerade ausreichende Mengen an Aluminiumlot zur Bereitstellung der Lötverbindung bereitstellt, konnte ein "Durchbrennen" der gelöteten Bauteile aufgrund eines Überangebotes an Al-Si-Lot in den Lötversuchen nicht festgestellt werden.

Eine typische, gelötete Konstruktionen, welche eine Lötverbindung zwischen dem erfindungsgemäßen Aluminiumverbundwerkstoff und einem weiteren Bauteil aufweisen, zeigt Fig. 3 in einer perspektivischen, schematischen Darstellung. Fig. 3 zeigt einen Sammelverteiler 7, einen sogenannten Header eines Wärmetauschers, welcher mehrere Aluminiumflachrohre 8 in Position hält, wobei die Aluminiumflachrohre 8 Flüssigkeit führend sind. Die Lamellen des Wärmetauschers sind in Fig. 3 nicht dargestellt.

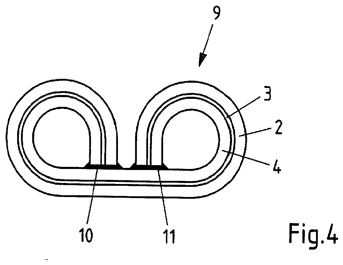

Fig. 4 zeigt eine schematische Schnittansicht eines weiteren Ausführungsbeispiels in Form eines Faltrohres 9, welches aus einem erfindungsgemäßen Aluminiumverbundwerkstoff mit zwei Deckschichten 2, 4 und einer innen liegenden Aluminiumlotschicht 3 besteht. Deutlich sind die beiden I-Stoß Lötverbindungen 10, 11 zu erkennen.

Ein auf verschiedene Dicken walzplattierter Aluminiumverbundwerkstoff bestehend aus zwei Deckschichten aus einer Aluminiumlegierung vom Typ AA3017 mit folgender Zusammensetzung: Si max. 0,25 Gew.-%, 0,25 Gew.-% ≤ Fe < 0,45 Gew.-%, 0,3 Gew.-% ≤ Cu ≤ 0,6 Gew.-%, 0,9 Gew.-% ≤ Mn ≤ 1,5 Gew.-%, Mg max. 0,05 Gew.-%, Cr max. 0,15 Gew.-%, Zn max. 0,10 Gew.-% Ti max. 0,25 Gew.-% Rest Al und Verunreinigungen einzeln max. 0,05 Gew.-% in Summe max. 0,15 Gew.-%. Die innen liegende Aluminiumlotschicht vom Typ AA4045, welche einen Anteil von 5 % an der Gesamtdicke des Aluminiumverbundwerkstoffes aufweist, wurde zu einem Sammelverteiler 7 umgeformt bzw. mit Aussparungen für die Aluminiumflachrohre 8 versehen. Die zu verschiedenen Dicken heruntergewalzten Sammelverteiler 7 wurden gemeinsam mit den in den Aussparungen vorhandenen Aluminiumflachrohren 8 einem CAB-Lötverfahren unterzogen, wobei in einer ersten Variante gar kein Flussmittel verwendet wurde, in einer zweiten Variante die Aluminiumflachrohre 8 mit einem Si-Zn-basierten Flussmittel beschichtet waren, in einer dritten Variante die Aluminiumrohre 8 unbeschichtet waren und das Flussmittel von Hand aufgetragen wurde und in einer letzten Variante mit einer Si-Zn-basierten Flussmittelbeschichtung vorgesehene Aluminiumflachrohre 8 verwendet wurden und zusätzlich die Lötverbindungen mit Flussmittel bestrichen wurden. Die Lötergebnisse zeigt Tabelle 1, wobei nur der Aluminiumverbundwerkstoff mit 1,0 mm Gesamtdicke eine erfindungsgemäße Ausführungsform darstellt.

Es ist zu erkennen, dass ohne Flussmittel nur eine teilweise Lötverbindung gelang und auch bei einer Schichtdicke von 50 µm der Aluminiumlotschicht und einer Verbundwerkstoffdicke von insgesamt 1 mm nur bei beschichteten Aluminiumflachrohren 8 eine einwandfreie Lötverbindung bereitgestellt werden konnte. Ohne Flussmittel gelang unabhängig von der Dicke der Aluminiumlotschicht keine einwandfreien Lötverbindungen. Mit zunehmender Aluminiumlotschichtdicke bereits ab 75 µm Aluminiumlotschichtdicke bei einer Verbundwerkstoffdicke von 1,5 mm zeigte aber auch ein blankes Aluminiumflachrohr mit von Hand aufgetragenem Flussmittel im Bereich der Lötverbindungen ein gutes Lötergebnis. Es wird davon ausgegangen, dass die im CAB-Lötverfahren erzielten Ergebnisse auch auf ein Vakuumlötverfahren ohne Flussmittel übertragbar sind, wobei beim Vakuumlötverfahren ab Aluminiumlotschichtdicken von 50 µm mit einem guten Lötergebnis gerechnet wird.

**Tabelle 1**

| | | | | | |
|---|---|---|---|---|---|
| Gesamtdicke | 1,0 mm | 1,5 mm | 2,0 mm | 2,5 mm | 3,0 mm |
| Dicke der Deckschichten | 475 µm | 712,5 µm | 950 µm | 1187,5 mm | 1425 µm |
| Lotdicke | 50 µm | 75 µm | 100 µm | 125 µm | 150 µm |
| Aluminiumröhrchen beschichtet (Si + Zn-Flux) | Gut | Gut | Gut | Gut | Gut |
| Aluminiumröhrchen blank + Auftrag von Flussmittel | Teilweise | Gut | Gut | Gut | Gut |
| Aluminiumröhrchen beschichtet (Si + Zn-Flux) + Auftrag von Flussmittel | Gut | Gut | Gut | Gut | Gut |

## Patentansprüche

1. Dreischichtiger lötbarer Aluminiumverbundwerkstoff (1) bestehend aus mindestens zwei verschiedenen Aluminiumlegierungen, wobei eine innere Schicht der drei Schichten eine Aluminiumlotschicht (3) aus einer Aluminiumlotlegierung ist, die anderen Schichten (2, 4) als Deckschichten ausgebildet sind und aus mindestens einer weiteren Aluminiumlegierung bestehen, wobei die mindestens eine weitere Aluminiumlegierung eine höhere Solidustemperatur als die Liquidustemperatur der Aluminiumlotlegierung aufweist und die Gesamtdicke des Aluminiumverbundwerkstoffs (1) 0,2 mm bis 1,0 mm beträgt,
**dadurch gekennzeichnet, dass**
die einzelnen Deckschichten (2, 4) eine Dicke aufweisen, welche die Dicke der Aluminiumlotschicht (3) um mindestens einen Faktor 1,5, vorzugsweise mindestens um einen Faktor fünf übersteigen.

2. Aluminiumverbundwerkstoff umfassend einen dreischichtigen Aluminiumverbundwerkstoff mit einer inneren Aluminiumlotschicht (3) aus einer Aluminiumlotlegierung und zwei Deckschichten (2, 4) aus mindestens einer weiteren Aluminiumlegierung, wobei die mindestens eine weitere Aluminiumlegierung eine höhere Solidustemperatur als die Liquidustemperatur der Aluminiumlotlegierung aufweist und die Gesamtdicke des Aluminiumverbundwerkstoffs (1) 0,2 mm bis 1,0 mm beträgt, **dadurch gekennzeichnet, dass**
die einzelnen Deckschichten (2, 4) eine Dicke aufweisen, welche die Dicke der Aluminiumlotschicht (3) um mindestens einen Faktor 1,5, vorzugsweise mindestens um einen Faktor fünf übersteigen und
weitere äußere Schichten bereitgestellt sind, welche als Opferanodenschicht, Korrosionsschutzschicht oder äußere Lotschichten ausgebildet sind.

3. Aluminiumverbundwerkstoff nach Anspruch 2,
**dadurch gekennzeichnet, dass**
die Deckschichten (2, 4) eine Dicke von 10% bis 49 % der Gesamtdicke des Aluminiumverbundwerkstoffs aufweisen.

4. Aluminiumverbundwerkstoff nach einem der Ansprüche 1 bis 3,
**dadurch gekennzeichnet, dass**
die Dicke der Aluminiumlotschicht (3) mindestens 25 µm beträgt.

5. Aluminiumverbundwerkstoff nach einem der Ansprüche 1 bis 4,
**dadurch gekennzeichnet, dass**
die einzelnen Deckschichten (2, 4) aus einer Aluminiumlegierung vom Typ AA1xxx, AA3xxx, AA5xxx, AA6xxx oder A7xxx bestehen.

6. Aluminiumverbundwerkstoff nach einem der Ansprüche 1 bis 5,
**dadurch gekennzeichnet, dass**
die Aluminiumlotschicht (3) aus einer AlSi-Aluminiumlegierung mit einem Si-Gehalt von 6 Gew.-% bis 13 Gew.-% besteht.

7. Aluminiumverbundwerkstoff nach einem der Ansprüche 1 bis 6,
**dadurch gekennzeichnet, dass**
der Aluminiumverbundwerkstoff (1) durch Walzplattieren oder simultanes Gießen hergestellt ist.

8. Aluminiumverbundwerkstoff nach einem der Ansprüche 1 bis 7,
**dadurch gekennzeichnet, dass**
die Deckschichten (2, 4) aus Aluminiumlegierungen bestehen, welche einen Mg-Gehalt von weniger als 0,25 Gew.-%, vorzugsweise weniger als 0,1 Gew.-% aufweisen.

9. Gelötete Konstruktion umfassend mindestens ein erstes Bauteil (7), welches zumindest teilweise aus einem Aluminiumverbundwerkstoff nach einem der Ansprüche 1 bis 8 besteht, welches mit mindestens einem zweiten Bauteil (8) über eine Lötverbindung verbunden ist.

10. Gelötete Konstruktion nach Anspruch 9,
**dadurch gekennzeichnet, dass**
die Konstruktion mindestens eine Lötverbindung in Form eines I-Stoßes aufweist.

11. Gelötete Konstruktion nach Anspruch 9 oder 10,
**dadurch gekennzeichnet, dass**
die gelötete Konstruktion ein Teil eines Wärmetauschers, vorzugsweise ein Sammelverteiler eines Wärmetauschers oder ein Faltrohr ist.

## Claims

1. Three-layered brazable aluminium composite material (1) consisting of at least two different aluminium alloys, whereby an inner layer of the three layers is an aluminium brazing layer (3) made from an aluminium brazing alloy, the other layers (2, 4) being configured as covering layers and consist of at least one further aluminium alloy, whereby the at least one further aluminium alloy has a higher solidus temperature than the liquidus temperature of the aluminium brazing alloy, whereby the total thickness of the aluminium composite material (1) is 0.2 mm to 1.0 mm, **characterised in that** the individual covering layers (2, 4) have a thickness that exceeds the thickness of the aluminium brazing layer (3) by at least a factor of 1.5, preferably at least by a factor of 5.

2. Aluminium composite material comprising a three-layered aluminium composite material with an inner aluminium brazing layer (3) made from an aluminium brazing alloy and two covering layers (2, 4) made from at least one further aluminium alloy, whereby the at least one further aluminium alloy has a higher solidus temperature than the liquidus temperature of the aluminium brazing alloy, whereby the total thickness of the aluminium composite material (1) is 0.2 mm to 1.0 mm, **characterised in that** the individual covering layers (2, 4) have a thickness that exceeds the thickness of the aluminium brazing layer (3) by at least a factor of 1.5, preferably at least by a factor of 5, and further outer layers are provided that are configured as sacrificial anode layer, anticorrosion layer or outer brazing layers.

3. Aluminium composite material in accordance with Claim 2, **characterised in that** the covering layers (2, 4) have a thickness of 10% to 49% of the total thickness of the
aluminium composite material.

4. Aluminium composite material in accordance with one of Claims 1 to 3, **characterised in that** the thickness of the aluminium brazing layer (3) is at least 25 µm.

5. Aluminium composite material in accordance with one of Claims 1 to 4, **characterised in that** the individual covering layers (2, 4) consist of an aluminium alloy of the type AA1xxx, AA3xxx, AA5xxx, AA6xxx or A7xxx.

6. Aluminium composite material in accordance with one of Claims 1 to 5, **characterised in that** the aluminium brazing layer (3) consists of an AlSi aluminium alloy with a Si content of 6 wt.-% to 13 wt.-%.

7. Aluminium composite material in accordance with one of Claims 1 to 6, **characterised in that** the aluminium composite material (1) is produced by means of roll cladding or simultaneous casting.

8. Aluminium composite material in accordance with one of Claims 1 to 7, **characterised in that** the covering layers (2, 4) consist of aluminium alloys that have a Mg content of less than 0.25 wt.-%, preferably less than 0.1 wt.-%.

9. Brazed construction comprising at least a first component (7), which consists at least in part of an aluminium composite material in accordance with one of Claims 1 to 8, which is connected to at least a second component (8) by means of a brazed connection.

10. Brazed construction in accordance with Claim 9, **characterised in that** the construction has at least one brazed connection in the form of a I-shaped butt joint.

11. Brazed construction in accordance with Claim 9 or 10, **characterised in that** the brazed construction is part of a heat exchanger, preferably a main distributor of a heat exchanger or a folded tube.

## Revendications

1. Matériau composite à base d'aluminium tricouche brasable (1) se composant au moins de deux alliages d'aluminium différents, une couche intérieure desdites trois couches étant une couche d'aluminium d'apport (3) composée d'un alliage d'aluminium d'apport, les autres couches (2, 4) étant conçues comme des couches de revêtement et étant constituées au moins d'un autre alliage d'aluminium, ledit au moins autre alliage d'aluminium présentant une température de solidus plus élevée que la température de liquidus de l'alliage d'aluminium d'apport, l'épaisseur totale du matériau composite à base d'aluminium (1) étant de 0,2 mm à 1,0 mm,
**caractérisé en ce que**
les couches de revêtement individuelles (2, 4) présentent une épaisseur qui dépasse l'épaisseur de la couche d'aluminium d'apport (3) au moins d'un facteur 1,5, de préférence au moins d'un facteur cinq.

2. Matériau composite à base d'aluminium comportant un matériau composite à base d'aluminium tricouche avec une couche d'aluminium d'apport intérieure (3) composée d'un alliage d'aluminium d'apport et de deux couches de revêtement (2, 4) constituées au moins d'un autre alliage d'aluminium, ledit au moins autre alliage d'aluminium présentant une température de solidus plus élevée que la température de liquidus de l'alliage d'aluminium d'apport, l'épaisseur totale du matériau composite à base d'aluminium (1) étant de 0,2 mm à 1,0 mm,
**caractérisé en ce que**
les couches de revêtement individuelles (2, 4) présentent une épaisseur qui dépasse l'épaisseur de la couche d'aluminium d'apport (3) au moins d'un facteur 1,5, de préférence au moins d'un facteur cinq et d'autres couches extérieures sont fournies qui sont conçues en tant que couche d'anode sacrificielle, couche anticorrosion ou couches d'apport extérieures.

3. Matériau composite à base d'aluminium selon la revendication 2,
**caractérisé en ce que**
les couches de revêtement (2, 4) présentent une épaisseur allant de 10 % à 49 % de l'épaisseur totale du matériau composite à base d'aluminium.

4. Matériau composite à base d'aluminium selon l'une des revendications 1 à 3,
**caractérisé en ce que**
l'épaisseur de la couche d'aluminium d'apport (3) s'élève à au moins 25 µm.

5. Matériau composite à base d'aluminium selon l'une des revendications 1 à 4,
**caractérisé en ce que**
les couches de revêtement individuelles (2, 4) se composent d'un alliage d'aluminium de type AA1xxx, AA3xxx, AA5xxx, AA6xxx ou A7xxx.

6. Matériau composite à base d'aluminium selon l'une des revendications 1 à 5,
**caractérisé en ce que**
la couche d'aluminium d'apport (3) se compose d'un alliage d'aluminium AISi avec une teneur en Si de 6 % à 13 % en poids.

7. Matériau composite à base d'aluminium selon l'une des revendications 1 à 6,
**caractérisé en ce que**
le matériau composite à base d'aluminium (1) est fabriqué par plaquage par laminage ou par coulée simultanée.

8. Matériau composite à base d'aluminium selon l'une des revendications 1 à 7,
**caractérisé en ce que**
les couches de revêtement (2, 4) se composent d'alliages d'aluminium qui présentent une teneur en Mg inférieure à 0,25 % en poids, de préférence inférieure à 0,1 % en poids.

9. Construction brasée comportant au moins un premier composant (7) lequel se compose, au moins partiellement, d'un matériau composite à base d'aluminium selon l'une des revendications 1 à 8, ce composant étant relié à au moins un deuxième composant (8) par une liaison par brasage.

10. Construction brasée selon la revendication 9,
**caractérisée en ce que**
la construction présente au moins une liaison par brasage sous forme de joint bout à bout.

11. Construction brasée selon la revendication 9 ou 10,
**caractérisée en ce que**
la construction brasée est une partie d'un échangeur de chaleur, de préférence un collecteur-distributeur d'un échangeur thermique ou un tuyau courbé.
